# EUROPÄISCHE PATENTSCHRIFT

(11) **EP 3 198 256 B1**
(45) Veröffentlichungstag und Bekanntmachung des Hinweises auf die Patenterteilung: **24.10.2018**
(21) Anmeldenummer: 15747117.8
(22) Anmeldetag: 23.07.2015
(51) Int. Cl.: G01N 3/42, B29C 65/78, B29C 65/00

(54) **VERFAHREN UND VORRICHTUNG ZUR ERMITTLUNG DES AUSHÄRTEVERHALTENS EINER KLEB- ODER DICHTSTOFFRAUPE**
METHOD AND DEVICE FOR DETERMINING THE CURING BEHAVIOUR OF AN ADHESIVE- OR SEALANT BEAD
PROCÉDÉ ET DISPOSITIF DE DÉTERMINATION DU DURCISSEMENT D'UN BOURRELET DE MATIÈRE ADHÉSIVE OU D'ÉTANCHÉITÉ

(30) Priorität: 25.09.2014 DE 102014014016
(43) Veröffentlichungstag der Anmeldung: 02.08.2017
(73) Patentinhaber: Atlas Copco IAS GmbH, 75015 Bretten (DE)
(72) Erfinder: SPEER, Thomas, 75203 Königsbach-Stein (DE)
(74) Vertreter: Patentanwälte Bregenzer und Reule Partnerschaftsgesellschaft mbB
(86) Internationale Anmeldenummer: PCT/EP2015/066838
(87) Internationale Veröffentlichungsnummer: WO 2016/045819

(56) Entgegenhaltungen:
- DE-A1- 4 311 975
- DE-A1-102007 047 868
- JP-A- H04 346 055
- US-A1- 2005 000 274
- BELL T J ET AL: "Elastic-plastic characterization of thin films with spherical indentation", THIN SOLID FILMS, ELSEVIER-SEQUOIA S.A. LAUSANNE, CH, Bd. 220, Nr. 1-2, 20. November 1992 (1992-11-20), Seiten 289-294, XP026059935, ISSN: 0040-6090, DOI: 10.1016/0040-6090(92)90587-2 [gefunden am 1992-11-20]

## Beschreibung

Die Erfindung betrifft ein Verfahren und eine Vorrichtung zur Ermittlung des Aushärteverhaltens einer Kleb- oder Dichtstoffraupe.

Klebstoffe und Dichtstoffe werden meist mittels einer Auftragsdüse in Form eines als Raupe bezeichneten Strangs auf das betreffende Werkstück aufgetragen, wobei die Raupe als lückenlos durchgehende Raupe oder als Aneinanderreihung einer Vielzahl von im Abstand zueinander angeordneten Raupenabschnitten ausgebildet sein kann. Eine Weiterverarbeitung des mit der Raupe versehenen Werkstücks muss rechtzeitig vor der Aushärtung des Kleb- oder Dichtstoffs erfolgen. Bei vielen Anwendungen ist es daher von großer Bedeutung, dass der Anwender das Aushärteverhalten des Kleb- oder Dichtstoffs kennt, bevor der Auftragsvorgang beginnt. Üblicherweise wird eine Testraupe auf ein Werkstück aufgetragen und ein Spateltest durchgeführt, bei dem zu vorbestimmten Zeitpunkten mit einem dünnen Spatel auf die Raupe gedrückt wird. Die Verformung der Raupe aufgrund des Spateldrucks stellt dabei ein Maß für die Aushärtung des Kleb- oder Dichtstoffs zu den vorgegebenen Zeitpunkten nach dessen Auftragen auf das Werkstück dar. An dieser Methode wird allerdings kritisiert, dass sie sehr stark von der ausführenden Person abhängig ist, da unterschiedliche Personen unterschiedlich stark mit dem Spatel auf die Raupe drücken und auch bei der Durchführung des Spateltests durch eine einzige Testperson nicht gewährleistet ist, dass diese zu den unterschiedlichen vorbestimmten Zeitpunkten stets mit derselben Kraft auf die Raupe drückt.

Aus der DE 43 11 975 A1 ist eine Vorrichtung zum Testen der Verfestigungsgeschwindigkeit von Stoffen bekannt, die mehrere Hebel aufweist. Die Hebel werden nacheinander mittels eines Bügels in die zu testende Masse eingetaucht und wieder herausgezogen, so dass an ihrem eintauchenden Ende beim Herausziehen Material haften bleibt. Sobald sich auf der Probe des zu testenden Materials eine Haut gebildet hat, können die Hebel aber nicht mehr eintauchen und werden nicht mehr benetzt, so dass an ihnen auch kein Material mehr haften bleibt. Mit dieser Vorrichtung kann die Hautbildung zeitlich zugeordnet werden, es können aber keine weiteren Aushärteeigenschaften des zu testenden Materials ermittelt werden. Zudem ist aus der US 2005/000274 A1 ein Verfahren bekannt, bei dem die Eindringtiefe von Messkörpern in eine aushärtende Masse gemessen wird. Zu diesem Zweck werden Messkörper zu unterschiedlichen Zeiten nach der Zubereitung der Masse mit einer vorbestimmten Kraft in die Masse gedrückt, und es wird die Tiefe bestimmt, bis zu der der jeweilige Messkörper in die Masse eindringt.

Es ist daher Aufgabe der Erfindung, ein Verfahren und eine Vorrichtung zur Ermittlung des Aushärteverfahrens einer Kleb- oder Dichtstoffraupe bereitzustellen, das bzw. die besser nachvollziehbare bzw. objektivere Ergebnisse liefert.

Diese Aufgabe wird erfindungsgemäß durch ein Verfahren mit den Merkmalen des Anspruchs 1 und eine Vorrichtung mit den Merkmalen des Anspruchs 7 gelöst. Vorteilhafte Ausgestaltungen der Erfindung sind Gegenstand der abhängigen Ansprüche.

Der Erfindung liegt der Gedanke zugrunde, dass ein Testkörper die Raupe stets mit zumindest annähernd derselben Kraft beaufschlagt, wenn er auf diese aufgesetzt wird und mit seiner Gewichtskraft auf sie wirkt und er somit nachvollziehbare und objektive Ergebnisse liefern kann. Dabei wird bevorzugt, dass mehrere und vorzugsweise alle Testkörper identisch ausgebildet sind, so dass sie zumindest annähernd mit derselben Gewichtskraft auf die Raupe einwirken. Vorteilhaft sind die Testkörper nicht nur in ihrem Gewicht identisch ausgebildet, sondern gegebenenfalls auch in ihrer Form und/oder im verwendeten Material, so dass auch die auf der Raupe ruhende Aufsetzfläche stets dieselbe ist. Die Testkörper werden zu unterschiedlichen, vorbestimmten Aufsetzzeitpunkten auf die Raupe aufgesetzt, und zu einem vorbestimmten Endzeitpunkt werden die durch die Testkörper verursachten Verformungen der Raupe gemessen. Diese dienen als Maß für die Aushärtezeit, so dass insbesondere bei einem zwei- oder dreikomponentigen Kleb- oder Dichtstoff dessen Zusammensetzung vor einem Einsatz in der Fertigung nochmals variiert werden kann.

Als Maß für die Aushärtung des Kleb- oder Dichtstoffs zu den Aufsetzzeitpunkten kann insbesondere die Einsinktiefe des jeweiligen Testkörpers in die Raupe herangezogen werden. Diese kann zudem auf einfache Weise gemessen werden. Eine große Einsinktiefe bedeutet, dass der Kleb- oder Dichtstoff zum betreffenden Aufsetzzeitpunkt noch wenig ausgehärtet ist, eine geringe Einsinktiefe oder eine Einsinktiefe von Null bedeutet, dass der Kleb- oder Dichtstoff zum betreffenden Aufsetzzeitpunkt bereits stark oder vollständig ausgehärtet ist.

Vorzugsweise werden die Testkörper in konstanten Zeitabständen auf die Kleb- oder Dichtstoffraupe aufgesetzt, so dass Messwerte zu Aufsetzzeitpunkten erhalten werden, die konstante Abstände zueinander aufweisen, so dass beispielsweise eine Interpolation vereinfacht wird.

Gemäß einer vorteilhaften Ausgestaltung der Erfindung wird eine Halteeinrichtung auf das Werkstück aufgesetzt, die Linearführungen für die Testkörper aufweist, in denen diese in Richtung auf das Werkstück zu linear führbar sind. Die Testkörper werden dann zu den Aufsetzzeitpunkten in die Linearführungen eingeführt und auf die Kleb- oder Dichtstoffraupe aufgesetzt, so dass sie diese mit ihrem Gewicht beaufschlagen. Die Verwendung der Halteeinrichtung erleichtert die Nachvollziehbarkeit der Ergebnisse, indem das Aufsetzen der Testkörper weitgehend vom Geschick der ausführenden Person unabhängig ist und die Positionierung der Testkörper auf der Raupe vereinfacht wird. Als Testkörper werden zweckmäßig Metallstifte verwendet, die vorzugsweise eine Dicke aufweisen, die sich zu einer unterseitigen Aufsetzfläche hin verringert. Metallstifte weisen ein hohes spezifisches Gewicht auf, so dass eine hinreichende Deformation der Raupe auch bei Verwendung relativ kleiner Testkörper zu erzielen ist. Wenn die Stifte eine kleine Aufsetzfläche aufweisen, führt dies zu einem die Deformation der Raupe noch vergrößernden höheren Druck.

Die Haltevorrichtung ist vorteilhaft eine gelochte Platte, und die Testkörper sind in den Löchern der Platte, die die Linearführungen bilden, mit Spiel geführt. Dadurch wird ein einfacher Aufbau der erfindungsgemäßen Vorrichtung erzielt.

Im Folgenden wird die Erfindung anhand eines in der Zeichnung schematisch dargestellten Ausführungsbeispiels näher erläutert. Es zeigen
- Fig. 1: eine auf ein Werkstück aufgetragene Klebstoffraupe mit einer Vorrichtung zur Ermittlung ihers Aushärteverhaltens in Seitenansicht und

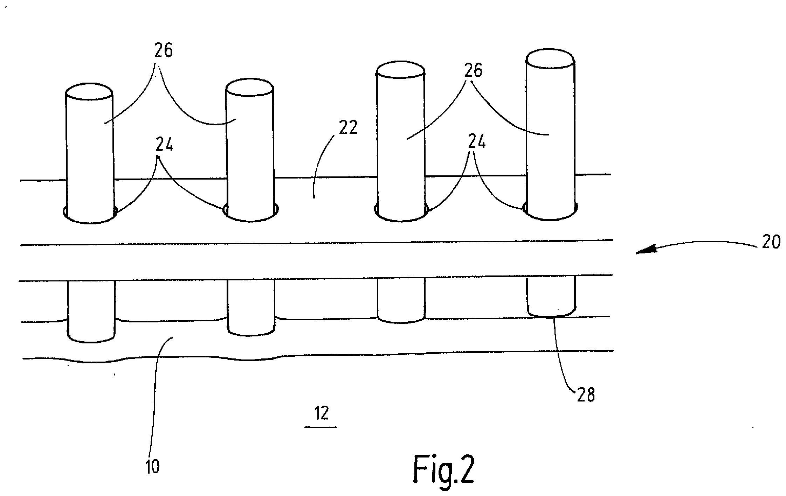

- Fig. 2: eine Detaildarstellung aus Fig. 1 in perspektivischer Ansicht.

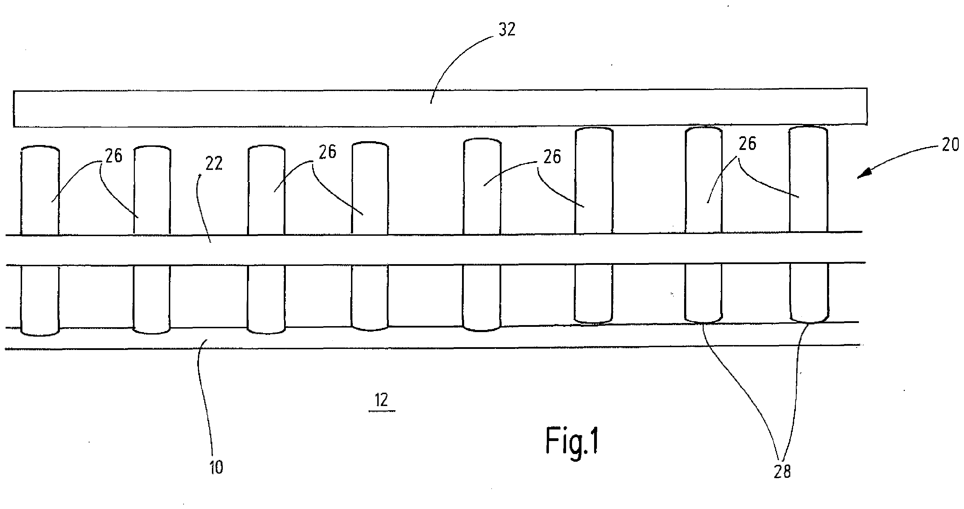

In der Zeichnung ist eine Klebstoffraupe 10 dargestellt, die auf ein Werkstück 12 aufgetragen wurde. Desweiteren ist in Fig. 1 eine Vorrichtung 20 dargestellt, die der Ermittlung des Aushärteverhaltens des Klebstoffs dient. Die Vorrichtung 20 weist eine Halteeinrichtung 22 in Form einer langgestreckten Platte auf, welche in einer Reihe in gleichen Abständen zueinander angeordnete Löcher 24 aufweist. Die Löcher 24 bilden Linearführungen für eine Vielzahl in Form, Material und Gewicht zumindest ähnlich und im gezeigten Ausführungsbeispiel identisch ausgebildeter Metallstifte 26 mit zylindrischer Außenkontur, die mit etwas Spiel in die Löcher 24 eingesetzt und dort in einer Richtung senkrecht zur Oberfläche des Werkstücks 12 geführt werden. Zu einer unterseitigen Aufsetzfläche 28 verringert sich der Querschnitt jedes der Metallstifte 26, so dass sein Gewicht auf einer relativ kleinen Fläche ruht.

Zur Ermittlung des Aushärteverhaltens des die Raupe 10 bildenden Klebstoffs wird die Raupe 10 zunächst auf das Werkstück 12 aufgetragen. Danach wird die Platte 22 mittels nicht näher dargestellter Stützbeine auf die Oberfläche des Werkstücks 12 aufgesetzt, und es werden in konstanten zeitlichen Abständen zu vorbestimmten Aufsetzzeitpunkten die Metallstifte 26 in die Löcher 24 eingeführt und mit ihrer Aufsetzfläche 28 auf die Klebstoffraupe 10 aufgesetzt. Im hier gezeigten Ausführungsbeispiel wird ein erster Metallstift 26 eineinhalb Minuten nach dem Auftragen der Klebstoffraupe 10 auf das Werkstück 12 auf die Raupe 10 aufgesetzt, ein zweiter Metallstift 26 nach drei Minuten, ein dritter Metallstift 26 nach viereinhalb Minuten und so fort. Da der Klebstoff im Laufe der Zeit aushärtet, sinken die zuerst auf die Raupe 10 aufgesetzten Metallstifte 26 tiefer in diese ein als die zuletzt auf die Raupe 10 aufgesetzten Metallstifte 26. Dies ist in Fig. 1 verdeutlicht, in der auf den zuletzt aufgesetzten und nahezu nicht in die Raupe 10 eingesunkenen Metallstift 26 eine horizontal verlaufende Leiste 32 aufgelegt ist. Die Einsinktiefe der zu den vorgegebenen Aufsetzzeitpunkten aufgesetzten Metallstifte 26, die in Fig. 1 durch den Abstand zur Leiste 32 veranschaulicht wird, ist dann ein charakteristisches Maß für das Aushärteverhalten des Klebstoffs. Die Einsinktiefe wird dabei zu einem vorgegebenen Endzeitpunkt gemessen, welcher vorzugweise ein Zeitpunkt ist, zu dem von einem vollständigen Aushärten des Klebstoffs ausgegangen werden kann.

Zusammenfassend ist folgendes festzuhalten: Die Erfindung betrifft ein Verfahren zur Ermittlung des Aushärteverhaltens einer Kleb- oder Dichtstoffraupe 10, wobei die Kleb- oder Dichtstoffraupe 10 auf ein Werkstück 12 aufgetragen wird, wobei mehrere Testkörper 26 zu unterschiedlichen, vorbestimmten Aufsetzzeitpunkten auf die Kleb- oder Dichtstoffraupe 10 aufgesetzt werden und wobei zu einem vorbestimmten Endzeitpunkt durch die Testkörper 26 verursachte Verformungen der Kleb- oder Dichtstoffraupe 10 gemessen werden.

## Patentansprüche

1. Verfahren zur Ermittlung des Aushärteverhaltens einer Kleb- oder Dichtstoffraupe (10), wobei die Kleb- oder Dichtstoffraupe (10) auf ein Werkstück (12) aufgetragen wird, wobei mehrere Testkörper (26) zu unterschiedlichen, vorbestimmten Aufsetzzeitpunkten auf die Kleb- oder Dichtstoffraupe (10) aufgesetzt werden, **dadurch gekennzeichnet, dass** zu einem vorbestimmten Endzeitpunkt durch die Testkörper (26) verursachte Verformungen der Kleb- oder Dichtstoffraupe (10) gemessen werden.

2. Verfahren nach Anspruch 1, **dadurch gekennzeichnet, dass** mehrere der Testkörper (26) und vorzugsweise alle Testkörper (26) identisch ausgebildet sind.

3. Verfahren nach Anspruch 1 oder 2, **dadurch gekennzeichnet, dass** zum Endzeitpunkt Einsinktiefen der Testkörper (26) in die Kleb- oder Dichtstoffraupe (10) gemessen werden.

4. Verfahren nach einem der vorangehenden Ansprüche, **dadurch gekennzeichnet, dass** die Testkörper (26) in konstanten Zeitabständen auf die Kleb- oder Dichtstoffraupe (10) aufgesetzt werden.

5. Verfahren nach einem der vorangehenden Ansprüche, **dadurch gekennzeichnet, dass** eine Halteeinrichtung (22) auf das Werkstück (12) aufgesetzt wird, die Linearführungen (24) für die Testkörper (26) aufweist, in denen sie in Richtung auf das Werkstück (12) zu linear führbar sind und dass die Testkörper (26) zur Beaufschlagung der Kleb- oder Dichtstoffraupe (10) mit ihrem Gewicht zu den Aufsetzzeitpunkten in die Linearführungen (24) eingeführt und auf die Kleb- oder Dichtstoffraupe (10) aufgesetzt werden.

6. Verfahren nach einem der vorangehenden Ansprüche, **dadurch gekennzeichnet, dass** als Testkörper (26) Metallstifte verwendet werden.

7. Vorrichtung zur Durchführung des Verfahrens gemäß einem der Ansprüche 1 bis 6 mit einer Halteeinrichtung (22) zum Aufsetzen auf das Werkstück (12), welche Linearführungen (24) zum verschieblichen Führen von Testkörpern (26) in Richtung auf das Werkstück (12) zu aufweist, und mit einer Anzahl von identischen Testkörpern (26) zum Einsetzen in die Linearführungen (24) und zum Beaufschlagen der Kleb- oder Dichtstoffraupe (10) mit ihrem Gewicht.

8. Vorrichtung nach Anspruch 7, **dadurch gekennzeichnet, dass** mehrere der Testkörper (26) und vorzugsweise alle Testkörper (26) identisch ausgebildet sind.

9. Vorrichtung nach Anspruch 7 oder 8, **dadurch gekennzeichnet, dass** die Halteeinrichtung (22) eine gelochte Platte ist und dass die Testkörper (26) in den Löchern (24) der Platte (22) mit Spiel geführte Stifte, insbesondere Metallstifte, sind.

10. Vorrichtung nach Anspruch 9, **dadurch gekennzeichnet, dass** sich die Dicke der Stifte (26) zu einer unterseitigen Aufsetzfläche (28) hin verringert.

## Claims

1. Method for determination of the curing behavior of an adhesive bead or sealant bead (10), wherein the adhesive bead or sealant bead (10) is applied to a workpiece (12), wherein multiple test bodies (26) are set onto the adhesive bead or sealant bead (10) at different, predetermined set-down time points, **characterized in that** deformations of the adhesive bead or sealant bead (10) caused by the test bodies (26) are measured at a predetermined end time point.

2. Method according to claim 1, **characterized in that** multiple test bodies (26) and preferably all the test bodies (26) are configured identically.

3. Method according to claim 1 or 2, **characterized in that** at the end time point, sink-in depths of the test bodies (26) into the adhesive bead or sealant bead (10) are measured.

4. Method according to one of the preceding claims, **characterized in that** the test bodies (26) are set down onto the adhesive bead or sealant bead (10) at constant time intervals.

5. Method according to one of the preceding claims, **characterized in that** a holding device (22) is set down onto the workpiece (12), which device has linear guides (24) for the test bodies (26), in which these can be linearly guided in the direction toward the workpiece (12), and that the test bodies (26) are introduced into the linear guides (24) at the set-down time points to impact the adhesive bead or sealant bead (10) with their weight, and are set down onto the adhesive bead or sealant bead (10) .

6. Method according to one of the preceding claims, **characterized in that** metal pins are used as test bodies (26) .

7. Apparatus for performing the method according to one of claims 1 to 6, having a holding device (22) for being set onto the workpiece (12), which device has linear guides (24) for displaceable guidance of test bodies (26) in a direction toward the workpiece (12), and having a plurality of identical test bodies (26) for insertion into the linear guides (24) and for impacting the adhesive bead or sealant bead (10) with their weight.

8. Apparatus according to claim 7, **characterized in that** multiple test bodies (26) and preferably all the test bodies (26) are configured to be identical.

9. Apparatus according to claim 7 or 8, **characterized in that** the holding device (22) is a perforated plate and that the test bodies (26) are pins, particularly metal pins, guided in the holes (24) of the plate (22) with play.

10. Apparatus according to claim 9, **characterized in that** the thickness of the pins (26) decreases toward an underside set-down surface (28).

## Revendications

1. Procédé de détermination du durcissement d'un bourrelet de matière adhésive ou d'étanchéité (10), dans lequel on dépose le bourrelet de matière adhésive ou d'étanchéité (10) sur une pièce (12), dans lequel on applique plusieurs corps de test (26) sur des points d'application prédéterminés différents sur le bourrelet de matière adhésive ou d'étanchéité (10), **caractérisé en ce que** l'on mesure à un instant final prédéterminé des déformations du bourrelet de matière adhésive ou d'étanchéité (10) provoquées par les corps de test (26).

2. Procédé selon la revendication 1, **caractérisé en ce que** plusieurs des corps de test (26) et de préférence tous les corps de test (26) sont identiques.

3. Procédé selon la revendication 1 ou 2, **caractérisé en ce que** l'on mesure à l'instant final des profondeurs de pénétration des corps de test (26) dans le bourrelet de matière adhésive ou d'étanchéité (10).

4. Procédé selon l'une quelconque des revendications précédentes, **caractérisé en ce que** l'on dépose les corps de test (26) à des intervalles de temps constants sur le bourrelet de matière adhésive ou d'étanchéité (10).

5. Procédé selon l'une quelconque des revendications précédentes, **caractérisé en ce que** l'on dépose sur la pièce (12) un dispositif de maintien (22), qui présente des guidages linéaires (24) pour les corps de test (26), dans lesquels ils peuvent être guidés linéairement en direction de la pièce (12) et **en ce que** l'on introduit les corps de test (26) dans les guidages linéaires (24) pour charger le bourrelet de matière adhésive ou d'étanchéité (10) avec leur poids aux instants de dépôt et on les dépose sur le bourrelet de matière adhésive ou d'étanchéité (10).

6. Procédé selon l'une quelconque des revendications précédentes, **caractérisé en ce que** l'on utilise des tiges métalliques comme corps de test (26).

7. Dispositif pour la mise en oeuvre du procédé selon l'une quelconque des revendications 1 à 6 avec un dispositif de maintien (22) à poser sur la pièce (12), qui présente des guidages linéaires (24) pour le guidage mobile de corps de test (26) en direction de la pièce (12), et avec un nombre de corps de test identiques (26) à introduire dans les guidages linéaires (24) et pour charger le bourrelet de matière adhésive ou d'étanchéité (10) avec leur poids.

8. Dispositif selon la revendication 7, **caractérisé en ce que** plusieurs des corps de test (26) et de préférence tous les corps de test (26) sont identiques.

9. Dispositif selon la revendication 7 ou 8, **caractérisé en ce que** le dispositif de maintien (22) est une plaque perforée et **en ce que** les corps de test (26) sont des tiges, en particulier des tiges métalliques, guidées avec du jeu dans les trous (24) de la plaque (22) .

10. Dispositif selon la revendication 9, **caractérisé en ce que** l'épaisseur des tiges (26) diminue en direction d'une face de pose inférieure (28).
